# EUROPEAN PATENT SPECIFICATION

(11) **EP 4 552 285 B1**
(45) Date of publication and mention of the grant of the patent: **20.05.2026**
(21) Application number: 22773783.0
(22) Date of filing: 08.07.2022
(51) Int. Cl.: H04L 9/40, H04L 67/12, B63B 79/30, G01S 7/40, G01S 13/32, G01S 13/937

(54) **METHOD AND SYSTEM FOR DETECTING ANOMALIES IN A RADAR SYSTEM ON BOARD OF A SHIP**
VERFAHREN UND SYSTEM ZUR ERKENNUNG VON ANOMALIEN IN EINEM RADARSYSTEM AN BORD EINES SCHIFFES
PROCÉDÉ ET SYSTÈME DE DÉTECTION D'ANOMALIES DANS UN SYSTÈME RADAR À BORD D'UN NAVIRE

(43) Date of publication of application: 14.05.2025
(73) Proprietor: E-Phors S.p.a., 20123 Milano (MI) (IT)
(72) Inventor: RUSSO, Enrico, 16145 Genova (GE) (IT); ARMANDO, Alessandro, 16145 Genova (GE) (IT); MERLO, Alessio, 16145 Genova (GE) (IT); LONGO, Giacomo, 16145 Genova (GE) (IT)
(74) Representative: Mozzi, Matteo
(86) International application number: PCT/IT2022/000036
(87) International publication number: WO 2024/009332

(56) References cited:
- SVILICIC BORIS ET AL: "Paperless ship navigation: cyber security weaknesses", JOURNAL OF TRANSPORTATION SECURITY, vol. 13, no. 3-4, 25 September 2020 (2020-09-25), pages 203 - 214, XP037313996, ISSN: 1938-7741, DOI: 10.1007/S12198-020-00222-2
- "Maritime navigation and radiocommunication equipment and systems - Digital interfaces - Part 460: Multiple talkers and multiple listeners - Ethernet interconnection - Safety and security", 20 January 2020 (2020-01-20), pages 1 - 297, XP082028630, Retrieved from the Internet <URL:https://api.iec.ch/harmonized/publications/download/743722> [retrieved on 20200120]
- SVILICIC ET AL: "A Study on Cyber Security Threats in a Shipboard Integrated Navigational System", JOURNAL OF MARINE SCIENCE AND ENGINEERING, vol. 7, no. 10, 1 October 2019 (2019-10-01), pages 364, XP093020701, ISSN: 2077-1312, DOI: 10.3390/jmse7100364
- SHEPHARD PRESS LTD.: "The Concise Global Industry Guide - Radar Systems", 1 May 2018 (2018-05-01), London, pages 1 - 89, XP055597508, ISBN: 978-1-9996538-6-6, Retrieved from the Internet <URL:https://mags.shephardmedia.com/HB-samples-2018/RS2-webmag.pdf> [retrieved on 20190618]
- LONGO G ET AL: "Attacking (and defending) the Maritime Radar System", ARXIV.ORG, CORNELL UNIVERSITY LIBRARY, 201 OLIN LIBRARY CORNELL UNIVERSITY ITHACA, NY 14853, 12 July 2022 (2022-07-12), XP091269307

## Description

### Field of the invention

The present invention relates to the naval field, in particular to a method and system for detecting anomalies in a radar system on board of a ship.

### Technological background

The operation of a ship increasingly relies on information and telecommunication technologies (ICT) and operational technologies (OT) present shipboard.

Said technologies achieve automation of shipboard operations associated with mechanical and electrical subsystems, guaranteeing significant cost reductions while, at the same time, increasing safety shipboard because they provide valuable support for planning, control, and monitoring the navigation as well as performing tasks that would be risky if performed by the crew.

As a result of faster and faster technological evolution and adaptation due to stringent regulations in the maritime field, also at the international level, significant digitization of shipboard systems is occurring.

In this regard, the so-called Integrated Navigation System (INS) is definitely at the center of this digitization.

Typically, the integrated navigation system collects information and, by integrating functions from a variety of electronic shipboard devices (e.g., radar), supports shipboard operators to plan, monitor, and control navigation by helping to improve the awareness of the overall situation.

It is apparent that radar plays a key role during navigation in forming the crew's situational awareness, thus allowing the crew to best deal with the situations encountered by the ship and the decision-making process to avoid collisions.

Indeed, the radar can automatically detect and calculate the trajectories of other ships.

Typically, a radar is integrated with various components of the integrated navigation system by means of the support of a data communication network which exploits standard network protocols, e.g., such as NMEA and ASTERIX CAT-240, where the NMEA protocol enables interaction between all devices in the integrated navigation system, while the ASTERIX CAT-240 protocol enables the transmission of video data between radar antennas and shipboard displays.

Although the use of these technologies helps improve the safety and efficiency of navigation, the digitization of a ship inevitably exposes it to cybersecurity threats.

This is certainly a non-negligible drawback because although the overall number of cyber-attacks is relatively small compared to other sectors and although successfully launching a cyber-attack against a ship is not easy (an integrated navigation system is generally offline and breaching it through lateral movements from other networks by controlling an attack from the Internet may not be an option; moreover, both the individual components and the configuration of the integrated navigation system may vary from ship to ship), the risk of a cyber-attack remains, and considering that the impact of a cyber-attack, especially in the maritime sector, could also lead to very serious events (e.g., loss of life, environment, or economy), the problem of cyber-attacks should definitely not be underestimated.

A cyber-attack can have a variety of objectives ranging from "merely" disrupting operations to inflicting heavy economic losses or the payment of a ransom to deliberately attempting to cause a collision.

Since a crew makes decisions by cross-checking multiple systems shipboard, it is critical that the information reported by instrumentation is available and not altered by a cyber-attack.

In this regard, the security of standard communication protocols, such as NMEA and ASTERIX, assumes that the data communication network and interconnected subsystems are reliable, and therefore no provision is made regarding additional protection mechanisms to ensure the integrity and availability of exchanged information.

Even worse, due to the average lifespan of modern ships (up to 40 years) and the fact that retrofitting an integrated navigation system is costly and timeconsuming, the aforementioned limitations in terms of cybersecurity are most often destined to accompany the ship throughout its entire operational period.

In light of the above, the need is strongly felt for a method for detecting anomalies in a radar system on board of a ship due to a cyber-attack or caused by malfunctions in the radar system (e.g., mechanical failure of the engine or other radar system components) so that it can ensure detection of a cyber-attack in the most effective, timely, and reliable manner possible and can be implemented aboard the ship while minimizing the impact, both in terms of installation time and cost, on the integrated navigation system and generally on the existing configuration of the ship itself.
SVILICIC BORIS ET AL: "Paperless ship navigation: cyber security weaknesses", Journal of transportation security vol. 13, no. 3-4, 25 September 2020, pages 203-214, XP037313996, discloses an analysis of cyber security weaknesses of the paperless ship navigation that relies on two internetworked ECDIS workstations in the backup arrangement.
"Maritime navigation and radiocommunication equipment and systems - Digital interfaces - Part 460: Multiple talkers and multiple listeners - Ethernet interconnection - Safety and security", IEC 61162-460:2018+AMD1:2020 CSV, IEC, 3, Rue de Varembè, PO BOX 131, CH-1211 GENEVA 20, Switzerland, 20 January 2020, pages 1-297, XP082028630, is a standard document IEC 61162-460 which provides requirements and test methods for equipment to be used in an IEC 61162-460 compliant network.
SVILICIC ET AL: "A study on Cyber Security Threats in a Shipboard Integrated Navigational System", Journal of Marine Science and Engineering, vol. 7, no. 10, 1 October 2019, page 364, XP093020701, discloses a study analyzing security vulnerabilities and threats for digitized equipment in ships.
Shephard Press Ltd.: "The Concise Global Industry Guide - Radar Systems", 1 may 2018, pages 1-89, XP055597508, discloses selected systems for coastal surveillance, commercial naval fire control, and naval surveillance listed by company at high level.

### Summary

It is the purpose of the present invention to devise and make available a method for detecting anomalies in a radar system on board of a ship due to a cyber-attack or caused by malfunctions in the radar system, which allows at least partially solving the drawbacks highlighted above with reference to the prior art, in particular, that allows guaranteeing the detection of a cyber-attack in the most effective, timely and reliable manner and that can be implemented shipboard while minimizing the impact, both in terms of installation time and cost, on the integrated navigation system and in general on the existing configuration of the ship itself, not even requiring specific interventions or modifications such as to invalidate previous certifications and/or standardizations that would then be required at that point.

Such a purpose is achieved by a method according to claim 1.

A related object of the present invention is a related system for detecting anomalies in a radar system on board of a ship.

Preferred embodiments of said method and system will be defined in the respective dependent claims.

### Brief description of the drawings

Further features and advantages of the system and the method thereof according to the invention will be apparent from the following description which illustrates preferred embodiments, given by way of indicative, nonlimiting examples, with reference to the accompanying figures, in which:
- figure 1 diagrammatically shows an example of a ship on which a system and method thereof for detecting anomalies in a radar system on board of a ship according to the present invention can be used;
- figure 2a shows, by means of a block diagram, a topology of a data communication network on board of a ship to which additional components installed aboard the ship are connected;
- figure 2b diagrammatically shows a display unit of a radar system in which the system according to the present invention can be implemented;
- figure 3 shows, by means of a block diagram, a system for detecting anomalies in a radar system on board of a ship, according to an embodiment of the invention;
- figure 4 diagrammatically shows a component of the system in figure 3, according to an embodiment of the invention;
- figure 5 shows, by means of a block diagram, a method for detecting anomalies in a radar system on board of a ship according to an embodiment of the invention.

### Detailed description

With reference to the aforementioned figures, reference numeral 100 as a whole indicates a system for detecting anomalies in a radar system on board of a ship, hereinafter also named only detection system or simply system, according to the invention.

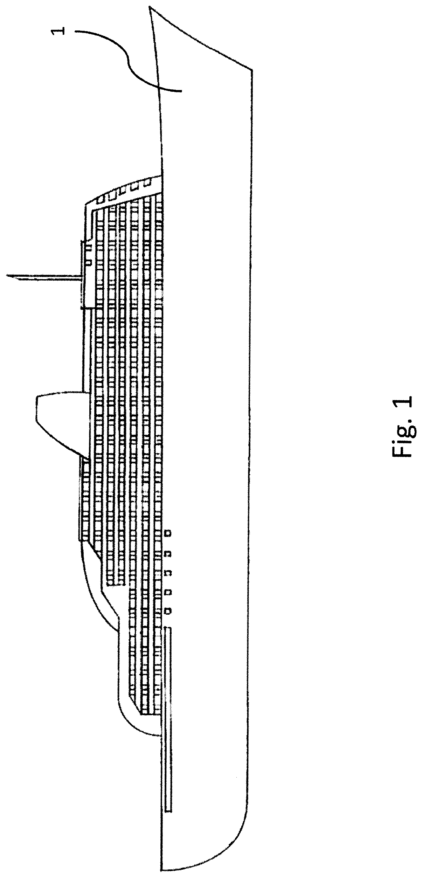

An example of a ship, indicated by reference numeral 1 as a whole, is shown in figure 1.

For the purpose of the present description, ship means any vessel usable for cruises, recreational and tourist service, e.g. a cruise ship, as shown in figure 1, or any other ship, e.g. such as ships usable in the military sector, merchant ships, work ships, and so on.

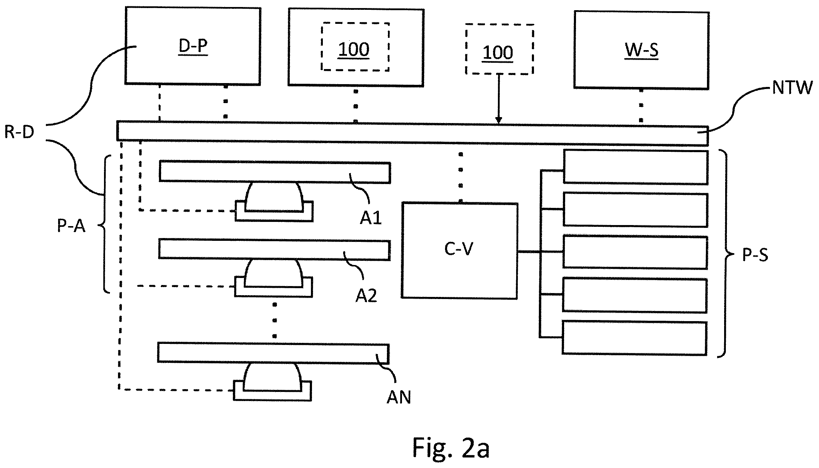

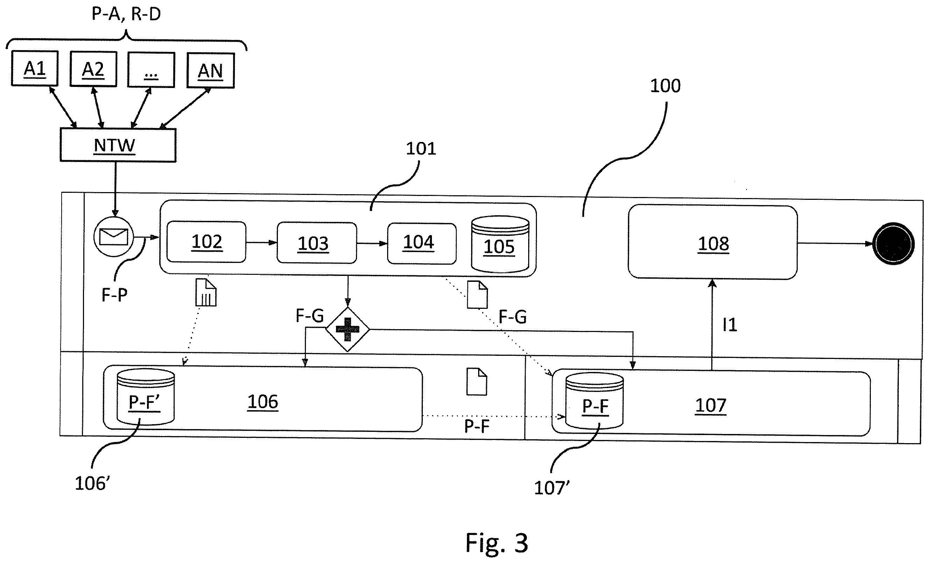

Referring specifically to figures 2a and 3, the system 100 is an electronic system installed shipboard.

In greater detail, the system 100 is operationally connected to a shipboard data communication network NTW.

An example of a data communication network NTW is diagrammatically shown in figure 2a.

The data communication network NTW, e.g., an Ethernet network, is the so-called navigation network.

In a ship, a plurality of sensors P-S installed shipboard is operationally connected to the data communication network NTW and provide respective sensed data to the navigation network.

In this regard, the plurality of the sensors P-S is operationally connected to the data communication network NTW by means of a converter C-V, e.g., an analogto-digital converter (ADC), capable of collecting the data collected from each sensor of the plurality of sensors PA and forwarding it to the data communication network NTW in a format which conforms to a set transmission protocol provided by the data communication network NTW.

Examples of sensors belonging to the plurality of sensors P-S are an Electronic Position Fixing System (EPFS), a Speed and Distance Position Equipment (SDME), a compass, a gyroscope, a transponder for a standard data communication system between a ship and other maritime authorities, such as the Automatic Identification System (AIS).

In a ship, a radar system R-D, a main computer C-P and a plurality of workstations W-S available to shipboard personnel are also operationally connected to the navigation network.

The radar system R-D comprises a plurality of radar antenna units P-A and at least one display unit D-P.

Each radar antenna unit, also indicated in the figures by references A1, A2, ..., AN, of said plurality of radar antenna units P-A is configured to detect objects around the ship by the use of radio waves.

In this regard, each radar antenna unit is adapted to radiate radio waves and receive return echo radio waves from objects around the ship.

According to the type, a radar antenna unit can be rotating, e.g., adapted to rotate by 360° about a respective rotation axis, or be non-rotating.

Each radar antenna unit is adapted to transmit the return echo radio waves to the at least one display unit D-P on the data communication network NTW by means of a set video data transmission protocol, e.g. a proprietary protocol, ASTERIX protocol, and so on.

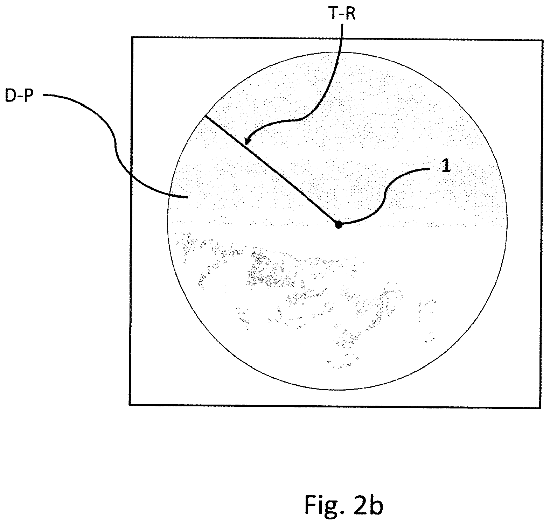

Referring now also to figure 2b, the at least one display unit D-P, also named Plan Position Indicator (PPI), is a circular display representative of a radar antenna unit, wherein the ship is shown in the center, always indicated by numerical reference 1.

A radial track T-R runs in unison with the radar antenna unit about the center. Each radial track represents radio waves of return echo at a planar position with detection and distance displayed in planar coordinates.

The at least one display unit D-P is preferably installed in the shipboard dashboard.

For example, the main computer C-P is a specialized digital navigation computer, named Electronic Chart Display and Information System (ECDIS), which is a real-time, i.e., simultaneous, electronic navigation system configured to display and manage map information (such as geographic coordinates or depth levels) on a display.

Referring again to figure 2a, the data communication network NTW (data navigation network) and the components operationally connected to it are representative of the so-called Integrated Navigation System (INS) which is present on a ship.

The system 100 object of the present invention is operationally connected to the data communication network NTW.

Therefore, the system 100 is operationally connected to the data communication network NTW, thus, on the one hand, to the plurality of radar antenna units PA of the radar system R-D and, on the other hand, to the at least one display unit D-P of the radar system R-D.

In an embodiment, shown with dotted lines in figure 2a, the system 100 is integrated into the main computer C-P.

In a further embodiment, as an alternative to the preceding one and shown with dashed lines in figure 2a, the system 100 is external to the main computer C-P.

The system 100, as will be described below, comprises a plurality of modules, e.g., hardware modules or software logic, each configured to perform specific operations to detect anomalies in the radar system.

With particular reference to figure 3, the system 100 comprises a shipboard collector module 101 configured to receive, from the shipboard data communication network NTW with the support of a set video data transmission protocol, a stream of data packets F-P coming from the plurality of radar antenna units P-A distributed shipboard and configured to transmit data over said data communication network NTW.

The stream of data packets F-P can be transmitted over the data communication network NTW in multicast mode or broadcast mode.

Each data packet originating from a radar antenna unit A1, A2, ..., AN of said plurality of radar antenna units P-A comprises an identification code I-D and technical values V-T representative of the radar antenna unit A1, A2, ..., AN of said plurality of radar antenna units P-A from which such data packet originates, according to the video data transmission protocol employed on the data communication network NTW, e.g., the ASTERIX protocol.

The identification code I-D of a radar antenna unit A1, A2, ..., AN is a unique code assigned to the radar antenna unit A1, A2, .., AN and represents the aggregation of multiple pieces of information, e.g., such as an antenna identification code (System Identification Code, SIC) of the radar antenna unit, a system area code (SAC) of the radar antenna unit, a data source IP address, a data destination IP address, and a network port number employed to communicate with the at least one display unit D-P of the radar system R-D.

The technical values V-T representative of the radar antenna unit can be found in the header of the data packet provided by the employed video data transmission protocol.

Examples of technical values V-T representative of the radar antenna unit are the rotation angle of the radar antenna unit, the video resolution in bits of the radar antenna unit, the azimuth and longitudinal resolution of the radar antenna unit, the type of video block, and the deviation of the radial track T-R relative to the center of the map ("center bias").

Again referring to figure 3, the shipboard collector module 101 comprises an analyzer sub-module 102, an aggregator sub-module 103, a history sub-module 104 and a first database sub-module 105.

These sub-modules of the collector module 101 will be described below.

The analyzer sub-module 102, e.g., a hardware module or software logic, is configured to analyze each received data packet to extract the identification code I-D and said technical values V-T representative of the radar antenna unit A1, A2, .., AN of said plurality of radar antenna units P-A from which said data packet originates and to provide said identification code I-D and said technical values V-T representative of the radar antenna unit A1, A2, ..., AN to a memory buffer (not shown in the figures) of said aggregator sub-module 103.

The aggregator sub-module 103, e.g., a hardware module or software logic, is configured to determine aggregate information I-A of the received data packet based on the identification code I-D and technical values V-T representative of the radar antenna unit extracted from the received data packet and based on additional technical values V-T' representative of the radar antenna unit of said plurality of radar antenna units P-A identified by the same identification code I-D and previously stored in the memory buffer of the aggregator sub-module 103.

Determining aggregate information means, for example, calculating the mean, variance, mode or norm, or frequency distribution of the aforesaid technical values.

It is worth noting that the determination of aggregate information for a radar antenna unit occurs with each revolution of the radar antenna unit.

Furthermore, the analyzer sub-module 103 is configured to determine for each received data packet, a characterization F-G of said received data packet comprising the identification code I-D and the technical values V-T representative of the radar antenna unit extracted from the received data packet, the aggregate information I-A determined by the aggregator sub-module 103 and an aggregate information time series S-T associated with said radar antenna unit A1, A2, ..., AN.

For example, the characterization F-G is a tuple thus comprising the aforesaid information.

The analyzer sub-module 103 is further configured to store the determined characterization F-G of the data packet received in the first database sub-module 105 of the shipboard collector module 101.

Instead, the analyzer sub-module 104 is configured to determine said aggregate information time series S-T contained in the characterization F-G of the data package received based on the aggregate information time series S-T' previously stored in the first database sub-module 105 of the shipboard collector module 101 and associated with previously received data packets referred to the same radar antenna unit of said plurality of radio antenna units P-A.

For example, the aggregate information time series S-T contained in the characterization F-G of the received data packet is determined based on N aggregate information time series S-T' previously stored in the first database sub-module 105 of the shipboard collector module 101, where N is an integer set a priori based on the computational capabilities of the system 100 in which the shipboard collector module 101 is installed.

Returning to figure 3, the system 100 further comprises a policy generator module 106 and a policy evaluation module 107, e.g., also hardware modules or software logic, described below.

In this regard, the shipboard collector module 101 is configured to provide the characterization F-G of the received data packet determined in the policy evaluation module 107.

Furthermore, the shipboard collector module 101 is configured to provide a last characterization F-G' determined for each received data packet referred to a radar antenna unit A1, A2, ..., AN of said plurality of radar antenna units P-A other than the radar antenna unit A1, A2, ..., AN from which the received data packet originated, to the policy generator module 106.

The policy generator module 106 is configured to select applicable set reference policies P-F based on the last characterization F-G' determined for each received data packet referred to a radar antenna unit A1, A2, ..., AN of said plurality of radar antenna units P-A other than the radar antenna unit A1, A2, ..., AN from which the received data packet provided by the collector module 101 originates.

The applicable set reference policies P-F are selectable, by the policy generator module 106, from a plurality of candidate set reference policies P-F' stored in a second database sub-module 106' of the policy generator module 106.

Each reference policy P-F comprises set rules representative of the expected conditions of a radar system when working correctly. This also means that the performance of the radar system must conform to set standards and set regulations, e.g., such as those required by the International Maritime Organization (IMO).

Indeed, the operation of a radar system strictly follows the manufacturer's specifications, e.g., video resolution or speed of antenna units, and depends on onboard configurations, e.g., SIC/SAC or IP addresses, which do not change over time.

Consequently, a list of rules constraining standards and regulations, manufacturer specifications, and shipboard configurations can determine the expected behavior of a radar system.

The aforesaid reference policies can be expressed on values, their calculated aggregations, e.g., mean, mode or norm, or variance, or frequency distribution obtained from the information carried by the data packets according to the video data transmission protocol, e.g., ASTERIX.

A reference policy contains conditions which specify its suitability for the radar system under monitoring and uses variables to reference quantities which depend on individual manufacturers or shipboard configurations.

According to the present invention, the system 100 can automatically infer the suitability of candidate reference policies and the values of their variables after having received an adequate amount of video data traffic according to the set video data transmission protocol, e.g., ASTERIX.

Examples of reference policies are a set angle of rotation, a set scanning angle, a set scanning speed, a set maximum distance covered, set obscured sectors (i.e., sectors wherein systematically no video data transmission is made), a set "center bias", a set azimuth and longitudinal resolution, a set number of bits, a set number of antenna units, and so on.

The policy generator module 106 is configured to provide the aforesaid selected applicable set reference P-F to a third database sub-module 107' of said policy evaluation module 107.

The policy evaluation module 107 is configured to detect the presence or absence of an anomaly in the radar system based on the comparison of the characterization F-G of the received data packet provided by the shipboard collector module 101 and the selected applicable set reference policies stored in the third sub-module database 107' of said policy evaluation module 107.

For example, a transmission of false video data in a radar antenna unit A1, A2, ..., AN, inserted into the radar system by a computer attack, can result in a change in the set rotational speed, thus the scanning speed, of said radar antenna unit A1, A2, ..., AN.

Therefore, if it is detected that a rotating radar antenna unit is rotating at a non-constant speed, contrary to a set reference policy, the policy evaluation module 107 is configured to detect the presence of an anomaly in the radar system.

Returning to the policy evaluation module 107, it is configured to generate information I1 representative of an anomaly detected in the radar system R-D.

In an embodiment, the collector module 101 comprises an anomaly receiver sub-module 108, e.g., a hardware module or software logic.

In this embodiment, the policy evaluation module 107 is configured to provide the information I1 representative of an anomaly detected in the radar system R-D to the anomaly receiver sub-module 108.

The anomaly receiver sub-module 108 is configured to display, by means of a software application, the information I1 representative of an anomaly detected in the radar system R-D.

For example, the software application can be a WEB application, a native application, a Windows or Linux application, and so on.

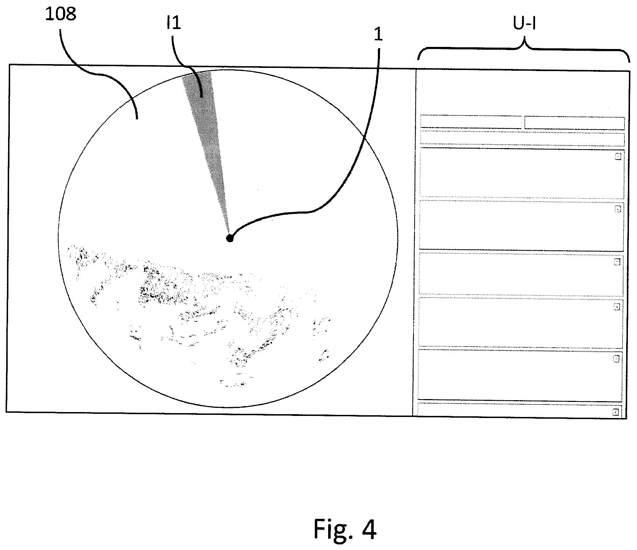

For example, as shown in figure 4, the information I1 representative of an anomaly detected in the radar system R-D is a sector of a circular scan plane such as the one provided in the at least one display unit D-P by the radar system R-D.

In an embodiment, in combination with the preceding one and shown in figure 4, the anomaly receiver sub-module 108 is configured to display, by means of the software application, additional technical information U-I representative of the detected anomaly besides the information I1 representative of a detected anomaly in the radar system R-D.

Additional technical information U-I comprises, for example, the policy which was breached and what function within the radar system triggered the breach.

In a further embodiment, in combination with any one of the above, the policy evaluation module 107 is configured to associate the information I1 representative of an anomaly detected in the radar system R-D with an anomaly destination IP address.

In this embodiment, the policy evaluation module 107 is configured to transmit the information I1 representative of an anomaly detected in the radar system R-D to a destination corresponding to the anomaly destination IP address associated with the information I1 representative of an anomaly detected in the radar system R-D.

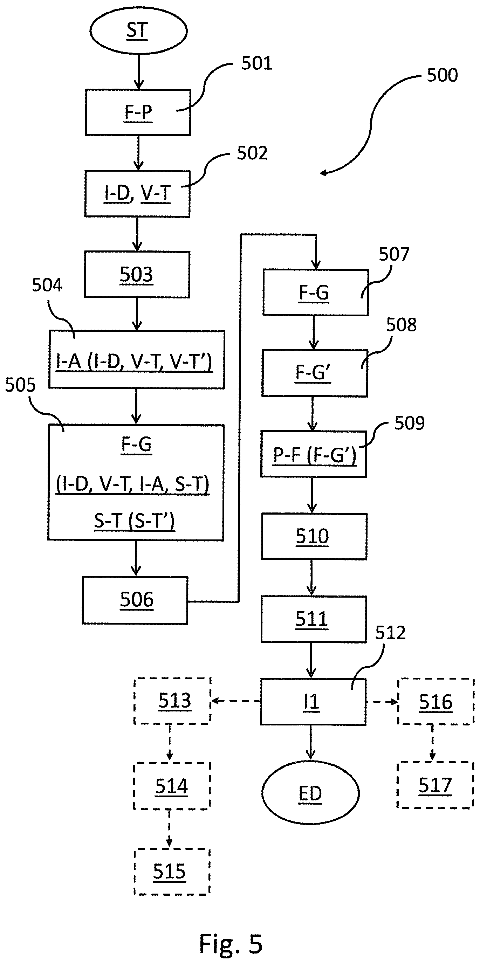

With reference now also to the block diagram in figure 5, a method 500 for detecting anomalies in a radar system R-D on board of a ship, hereinafter also detection method or simply method.

The radar system R-D was described above.

Furthermore, it is worth noting that the components and information mentioned below with the description of the method were described previously with reference to the system 100 and will therefore not be repeated for the sake of brevity.

The method 500 comprises a symbolic step of starting ST.

The method 500 comprises a step of receiving 501, by a shipboard collector module 101, from a shipboard data communication network NTW with the support of a set video data transmission protocol, a stream of data packets F-P from a plurality of radio antenna units P-A distributed shipboard and configured to transmit data over said data communication network NTW.

Each data packet originating from a radar antenna unit A1, A2, ..., AN of said plurality of radar antenna units P-A comprises an identification code I-D and technical values V-T representative of the radar antenna unit A1, A2, ..., AN of said plurality of radar antenna units P-A from which such data packet originates, according to the video data transmission protocol employed on the data communication network NTW, e.g., the ASTERIX protocol.

The identification code I-D of a radar antenna unit and representative of the technical values V-T of the radar antenna unit were described before, with some examples.

The method 500 further comprises a step of analyzing 502, by an analyzer sub-module 102 of the shipboard collector module 101, each received data packet to extract the identification code I-D and said technical values V-T representative of the radar antenna unit A1, A2, .., AN of said plurality of radar antennas P-A from which said data packet originates, and providing 503, by an analyzer sub-module 102 of the shipboard collector module 101, said identification code I-D and said technical values V-T representative of the radar antenna unit A1, A2, ..., AN to a memory buffer (not shown in the figures) of an aggregator sub-module 103 of the shipboard collector module 101.

The method 500 further comprises a step of determining 504, by the aggregator sub-module 103 of the shipboard collector module 101, aggregate information I-A of the received data packet based on the identification code I-D and the technical values V-T representative of the radar antenna unit A1, A2, ..., AN extracted from the received data packet and based on additional technical values V-T' representative of the radar antenna unit A1, A2, ..., AN of said plurality of radar antenna units P-A identified by the same identification code I-D and previously stored in the memory buffer of the aggregator sub-module 103 of the shipboard collector module 101.

The definition of determining aggregate information was defined above.

The method 500 further comprises a step of determining 505, by the analyzer sub-module 102 of the shipboard collector module 101, for each received data packet, a characterization F-G of said received data packet comprising the identification code I-D and the technical values V-T representative of the radar antenna unit A1, A2, .., AN extracted from the received data packet, the aggregate information I-A determined by the aggregator sub-module 103 and an aggregate information time series S-T associated with said radar antenna unit A1, A2, ..., AN.

As mentioned earlier, the characterization F-G is, for example, a tuple thus comprising the aforesaid information.

The method 500 further comprises a step of storing 506, by the analyzer sub-module 102 of the shipboard collector module 101, the determined characterization F-G of the data packet received in a first database sub-module 105 of the shipboard collector module 101.

The aggregate information time series S-T contained in the characterization F-G of the received data packet is determined, by a history sub-module 104 of the shipboard collector module 101, based on aggregate information time series S-T' previously stored in the first database sub-module 105 of the shipboard collector module 101 and associated with previously received data packets referring to the same radar antenna unit of said plurality of radar antenna units P-A.

An example of determining the aggregate information time series S-T contained in the characterization F-G of the received data packet was given earlier.

The method 500 further comprises a step of providing 507, by the shipboard collector module 101, the determined characterization F-G of the received data packet 101 to a policy evaluation module 107.

Furthermore, the method 500 comprises a step of providing 508, by the shipboard collector module 101, a last characterization F-G' determined for each received data packet referred to an antenna unit of said plurality of radar antenna units P-A other than the radar antenna unit from which the received data packet originates, to a policy generator module 106.

The method 500 comprises a step of selecting 509, by the policy generator module 106, applicable set reference policies P-F based on a last characterization F-G' determined for each received data packet referred to a radar antenna unit of said plurality of radar antenna units P-A other than the radar antenna unit from which the received data packet originates provided by the shipboard collector module 101.

The applicable set reference policies P-F are selectable from a plurality of candidate set reference policies P-F' stored in a second database sub-module 106' of the policy generator module 106.

As mentioned above, each reference policy P-F comprises set rules representative of the expected conditions of a radar system when working correctly.

Examples of the reference policy were provided above.

The method 500 further comprises a step of providing 510, by the policy generator module 106, said selected applicable set reference policies P-F to a third database sub-module 107' of said policy evaluation module 107.

The method 500 further comprises a step of detecting 511, by the policy evaluation module 107, the presence or absence of an anomaly in the radar system based on the comparison between the characterization F-G of the received data packet provided by the shipboard collector module 101 and the selected applicable set reference policies P-F stored in the third database sub-module 107' of said policy evaluation module 107.

The method 500 further comprises a step of generating 512, by the policy evaluation module 107, information I1 of an anomaly detected in the radar system R-D.

The method further comprises a symbolic step of ending ED.

In an embodiment, shown with dashed lines in figure 5, wherein the shipboard collector module 101 comprises an anomaly receiver sub-module 108, e.g., a hardware module or software logic, the method 500 comprises a step of providing 513, by the policy evaluation module 107, the information I1 representative of an anomaly detected in the radar system R-D to the anomaly receiver sub-module 108 of the shipboard collector module 101.

In this embodiment, the method 500 further comprises a step of displaying 514, by the anomaly receiver sub-module 108, by means of a software application, the information I1 representative of an anomaly detected in the radar system R-D.

Examples of software application were indicated above.

For example, as shown in figure 4, the information I1 representative of an anomaly detected in the radar system R-D is a sector of a circular scan plane such as the one provided in the at least one display unit D-P by the radar system R-D.

In an embodiment, in combination with the preceding one and shown with dashed lines in figure 5, the method 500 comprises a step of displaying 515, by the anomaly receiver sub-module 108 by means of the software application, additional technical information U-I representative of the detected anomaly besides the information I1 representative of a detected anomaly in the radar system R-D.

Additional technical information U-I comprises, for example, the policy which was breached and what function within the radar system triggered the breach.

In a further embodiment, in combination with any one of the above and shown with dashed lines in figure 5, the method 500 further comprises a step of associating 516, by the policy evaluation module 107, an anomaly destination IP address with the information I1 representative of an anomaly detected in the radar system R-D.

In this embodiment, the method further comprises a step of transmitting 517, by the policy evaluation module 107, the information I1 representative of an anomaly detected in the radar system R-D to a destination corresponding to the anomaly destination IP address associated with the information I1 representative of an anomaly detected in the radar system R-D.

It is worth noting that the object of the present invention is fully achieved.

Firstly, the method and related system for detecting anomalies in the radar system of a ship monitors the data navigation network which detects similar and unknown attacks against the radar system and operates without requiring changes to the existing shipboard integrated navigation system (INS) configuration.

Indeed, it can automatically adapt to any configuration of the ship.

Furthermore, the method and related system according to the present invention can detect all the attacks which aim at breaching the normal operation of a radar system because it models the expected behavior in any running configuration.

Furthermore, the method and related system covered by the present invention operates by connecting to the bridge data communication network and listening to multicast video data traffic like other equipment in the integrated navigation system (INS).

Therefore, the implementation of the method and related system according to the present invention does not require redesign, standardization and certification of the systems already shipboard.

Again, the method and related system covered by the present invention enables the detection of attacks on the data navigation network with high accuracy and at a minimal resource footprint.

Finally, it is worth noting that the detection operates only on the data packet header provided by the video data transmission protocol and can guarantee similar performance on other types of antenna units, even at higher video resolutions.

The method and related system covered by the present invention can recognize attacks with a high level of accuracy.

The distinguishing features of this method and related system are self-adaptation to each onboard configuration, modeling the normative and expected behavior to identify known and unknown attacks, the possibility of monitoring without altering the onboard systems, and minimal resource footprint.

A person skilled in the art may make changes and adaptations to the embodiment of the method and respective system described above or can replace elements with others which are functionally equivalent to satisfy contingent needs without departing from the scope of protection of the appended claims. All the features described above as belonging to one possible embodiment may be implemented independently from the other described embodiments

## Claims

1. A method (500) for detecting anomalies in a radar system (R-D) on board of a ship (1), comprising steps of:
- receiving (501), by a shipboard collector module (101), from a shipboard data communication network (NTW) with the support of a set video data transmission protocol, a stream of data packets (F-P) coming from a plurality of radar antenna units (P-A) distributed shipboard and configured to transmit data on said data communication network (NTW), each data packet originating from a radar antenna unit (A1, A2, .., AN) of said plurality of radar antenna units (P-A), and comprising an identification code (I-D) and technical values (V-T) representative of the radar antenna unit (A1, A2, ..., AN) of said plurality of antennas (P-A) from which said data packet originates;
- analyzing (502), by an analyzer sub-module (102) of the shipboard collector module (101), each received data packet to extract the identification code (I-D) and said technical values (V-T) representative of the radar antenna unit (A1, A2, .., AN) of said plurality of antennas (P-A) from which said data packet originates and providing (503) said identification code (I-D) and said technical values (V-T) representative of the radar antenna unit (A1, A2, ..., AN) to a memory buffer of an aggregator sub-module (103) of the shipboard collector module (101);
- determining (504), by the aggregator sub-module (103) of the shipboard collector module (101), aggregate information (I-A) of the received data packet based on the identification code (I-D) and technical values (V-T) representative of the radar antenna unit (A1, A2, ..., AN) extracted from the received data packet and based on additional technical values (V-T') representative of the radar antenna unit (A1, A2, ..., AN) of said plurality of radar antenna units (P-A) identified by the same identification code (I-D) and previously stored in the memory buffer of the aggregator sub-module (103) of the shipboard collector module (101);
- determining (505), by the analyzer sub-module (102) of the shipboard collector module (101), for each received data packet, a characterization (F-G) of said received data packet comprising the identification code (I-D) and the technical values (V-T) representative of the radar antenna unit (A1, A2, .., AN) extracted from the received data packet, the aggregate information (I-A) determined by the aggregator sub-module (103) and an aggregate information time series (S-T) associated with said radar antenna unit (A1, A2, ..., AN);
- storing (506), by the analyzer sub-module (102) of the shipboard collector module (101), the determined characterization (F-G) of the received data packet in a first database sub-module (105) of the shipboard collector module (101), said aggregate information time series (S-T) contained in the characterization (F-G) of the received data packet being determined, by a historical sub-module (104) of the shipboard collector module (101), based on aggregate information time series (S-T') previously stored in the first database sub-module (105) of the shipboard collector module (101) and associated with previously received data packets referring to the same radar antenna unit (A1, A2, .., AN) of said plurality of radio antenna units (P-A);
- providing (507), by the shipboard collector module (101), the determined characterization (F-G) of the received data packet to a policy evaluation module (107);
- providing (508), by the shipboard collector module (101), a last characterization (F-G') determined for each received data packet referred to a radar antenna unit (A1, A2, ..., AN) of said plurality of radar antenna units (P-A) other than the radar antenna unit (A1, A2, ..., AN) from which the received data packet originates, to a policy generator module (106);
- selecting (509), by the policy generator module (106), set reference policies (P-F) applicable based on the last characterization (F-G') determined for each received data packet referred to a radar antenna unit (A1, A2, ..., AN) of said plurality of radar antenna units (PA) other than the radar antenna unit (A1, A2, .., AN) from which the received data packet originates provided by the shipboard collector module (101), said applicable set reference policies (F-P) being selected from a plurality of candidate set reference policies (P-F') stored in a second database sub-module (106') of the policy generator module (106), each reference policy (P-F) comprising set rules representative of expected conditions of the radar system (R-D) when operating correctly;
- providing (510), by the policy generator module (106), said selected applicable set reference policies (P-F) to a third database sub-module (107') of said policy evaluation module (107);
- detecting (511), by the policy evaluation module (107), the presence or absence of an anomaly in the radar system (R-D) based on the comparison between the characterization (F-G) of the received data packet provided by the shipboard collector module (101) and the selected applicable set reference policies (P-F) stored in the third database sub-module (107') of said policy evaluation module (107);
- generating (512), by the policy evaluation module (107), information (I1) representative of an anomaly detected in the radar system (R-D).

2. The method (500) according to claim 1, wherein the shipboard collector module (101) comprises an anomaly receiver sub-module (108), the method (500) comprising a step of providing (513), by the policy evaluation module (107), the information (I1) representative of an anomaly detected in the radar system (R-D) to the anomaly receiver sub-module (108) of the shipboard collector module (101).

3. The method (500) according to any one of the preceding claims, further comprising a step of displaying (514), by the anomaly receiver sub-module (108), by means of a software application, the information (I1) representative of an anomaly detected in the radar system (R-D).

4. The method (500) according to claim 3, comprising a step of displaying (515), by the anomaly receiver sub-module (108), by the software application, additional technical information (U-I) representative of the detected anomaly besides the information (I1) representative of a detected anomaly in the radar system (R-D).

5. The method (500) according to any one of the previous claims, further comprising a step of associating (516), by the policy evaluation module (107), an anomaly destination IP address with the information (I1) representative of an anomaly detected in the radar system (R-D) .

6. The method (500) according to claim 5, further comprising a step of transmitting (517), by the policy evaluation module (107), the information (I1) representative of an anomaly detected in the radar system (R-D) to a destination corresponding to the anomaly destination IP address associated with the information (I1) representative of an anomaly detected in the radar system (R-D).

7. An anomaly detection system (100) for use in a radar system (R-D) on board of a ship (1), comprising:
- a shipboard collector module (101) configured to receive from a shipboard data communication network (NTW) with the support of a set video data transmission protocol, a stream of data packets (F-P) coming from a plurality of radar antenna units (P-A) distributed shipboard and configured to transmit data on said data communication network (NTW), each data packet originating from a radar antenna unit (A1, A2, .., AN) of said plurality of radar antenna units (P-A), and comprising an identification code (I-D) and technical values (V-T) representative of the radar antenna unit (A1, A2, ..., AN) of said plurality of antennas (P-A) from which said data packet originates,
said shipboard collector module (101) comprising:
- an analyzer sub-module (102);
- an aggregator sub-module (103);
- a historical sub-module (104);
- a first database sub-module (105);
said analyzer sub-module (102) being configured to analyze each received data packet to extract the identification code (I-D) and said technical values (V-T) representative of the radar antenna unit (A1, A2, .., AN) of said plurality of radar antenna units (P-A) from which said data packet originates and to provide said identification code (I-D) and said technical values (V-T) representative of the radar antenna unit (A1, A2, ..., AN) to a memory buffer of said aggregator sub-module (103),
the aggregator sub-module (103) being configured to determine aggregate information (I-A) of the received data packet based on the identification code (I-D) and the technical values (V-T) representative of the radar antenna unit (A1, A2, ..., AN) extracted from the received data packet and based on additional technical values (V-T') representative of the radar antenna unit (A1, A2, ..., AN) of said plurality of radar antenna units (P-A) identified by the same identification code (I-D) and previously stored in the memory buffer of the aggregator sub-module (103),
the analyzer sub-module (103) being configured to determine for each received data packet, a characterization (F-G) of said received data packet comprising the identification code (I-D) and technical values (V-T) representative of the radar antenna unit (A1, A2, .., AN) extracted from the received data packet, the aggregate information (I-A) determined by the aggregator sub-module (103) and an aggregate information time series (S-T) associated with said radar antenna unit (A1, A2, ..., AN),
the analyzer sub-module (103) being configured to store the determined characterization (F-G) of the received data packet in a first database sub-module (105) of the shipboard collector module (101), the historical sub-module (104) being configured to determine said aggregate information time series (S-T) contained in the characterization (F-G) of the data package received based aggregate information time series (S-T') previously stored in the first database sub-module (105) of the shipboard collector module (101) and associated with previously received data packets referred to the same radar antenna unit (A1, A2, .., AN) of said plurality of radio antenna units (P-A),
the system (100) further comprises a policy generator module (106) and a policy evaluation module (107),
the shipboard collector module (101) being configured to provide the determined characterization (F-G) of the received data packet to the policy evaluation module (107),
the shipboard collector module (101) being configured to provide a last determined characterization for each received data packet referred to a radar antenna unit (A1, A2, ..., AN) of said plurality of radar antenna units (P-A) other than the radar antenna unit (A1, A2, ..., AN) from which the received data packet originates, to the policy generator module (106),
the policy generator module (106) being configured to select applicable set reference policies (P-F) based on the last characterization (F-G) determined for each received data packet referred to a radar antenna unit (A1, A2, ..., AN) of said plurality of radar antenna units (P-A) other than the radar antenna unit (A1, A2, .., AN) from which the received data packet provided by the shipboard collector module (101) originates, said applicable set reference policies (P-F) being selectable from a plurality of candidate set reference policies (P-F') stored in a second database sub-module (106') of the policy generator module (106), each reference policy (P-F) comprising set rules representative of expected conditions of the radar system when correctly operated,
the policy generator module (106) being configured to provide said selected applicable set reference policies (P-F) to a third database sub-module (107') of said policy evaluation module (107),
the policy evaluation module (107) being configured to detect the presence or absence of an anomaly in the radar system based on the comparison between the characterization (F-G) of the received data packet provided by the shipboard collector module (101) and the selected applicable set reference policies stored in the third database sub-module (107') of said policy evaluation module (107),
the policy evaluation module (107) being configured to generate information (I1) representative of an anomaly detected in the radar system (R-D).

8. The system (100) according to claim 7, wherein the shipboard collector module (101) comprises an anomaly receiver sub-module (108), the policy evaluation module (107) being configured to provide the information (I1) representative of an anomaly detected in the radar system (R-D) to the anomaly receiver sub-module (108).

9. The system (100) according to claim 8, wherein the anomaly receiver sub-module (108) is configured to display, by means of a software application, the information (I1) representative of an anomaly detected in the radar system (R-D).

10. The system (100) according to claim 9, wherein the anomaly receiver sub-module (108) is configured to display, by means of the software application, additional technical information (U-I) representative of the detected anomaly besides the information (I1) representative of a detected anomaly in the radar system (R-D) .

11. The system (100) according to any one of the preceding claims from 7 to 10, wherein the policy evaluation module (107) is configured to associate the information (I1) representative of an anomaly detected in the radar system (R-D) with an anomaly destination IP address.

12. The system (100) according to claim 11, wherein the policy evaluation module (107) is configured to transmit the information (I1) representative of an anomaly detected in the radar system (R-D) to a destination corresponding to the anomaly destination IP address associated with the information (I1) representative of an anomaly detected in the radar system (R-D).

## Patentansprüche

1. Verfahren (500) zur Erkennung von Anomalien in einem Radarsystem (R-D) an Bord eines Schiffes (1), umfassend die Schritte:
- Empfangen (501) eines Stroms von Datenpaketen (F-P) durch ein Bord-Sammlermodul (101) aus einem Bord-Datenkommunikationsnetzwerk (NTW) unter Verwendung eines festgelegten Videodatenübertragungsprotokolls, wobei die Datenpakete von einer Vielzahl von Radarantenneneinheiten (P-A) stammen, die an Bord des Schiffes verteilt und dazu konfiguriert sind, Daten über das Datenkommunikationsnetzwerk (NTW) zu übertragen, wobei jedes Datenpaket von einer Radarantenneneinheit (A1, A2, ..., AN) der Vielzahl von Radarantenneneinheiten (P-A) stammt und einen Identifikationscode (I-D) und technische Werte (V-T) umfasst, die für die Radarantenneneinheit (A1, A2, ..., AN) der Vielzahl von Antennen (P-A) repräsentativ sind, von der das Datenpaket stammt;
- Analysieren (502) jedes empfangenen Datenpakets durch ein Analysator-Untermodul (102) des Bord-Sammlermoduls (101), um den Identifikationscode (I-D) und die technischen Werte (V-T) zu extrahieren, die für die Radarantenneneinheit (A1, A2, ..., AN) aus der Vielzahl von Antennen (P-A) repräsentativ sind, von der das Datenpaket stammt, und Bereitstellen (503) des Identifikationscodes (I-D) und der technischen Werte (V-T), die für die Radarantenneneinheit (A1, A2, ..., AN) repräsentativ sind, an einen Speicherpuffer eines Aggregator-Untermoduls (103) des Bord-Sammlermoduls (101);
- Bestimmen (504) von aggregierten Informationen (I-A) des empfangenen Datenpakets durch das Aggregator-Untermodul (103) des Bord-Sammlermoduls (101) auf der Grundlage des Identifikationscodes (I-D) und der technischen Werte (V-T), die für die Radarantenneneinheit (A1, A2, ..., AN) repräsentativ sind und aus dem empfangenen Datenpaket extrahiert wurden, und auf der Grundlage zusätzlicher technischer Werte (V-T'), die für die Radarantenneneinheit (A1, A2, ..., AN) der Vielzahl von Radarantenneneinheiten (P-A) repräsentativ sind, die durch denselben Identifikationscode (I-D) identifiziert und zuvor im Speicherpuffer des Aggregator-Untermoduls (103) des Bord-Sammlermoduls (101) gespeichert wurden;
- Bestimmen (505) durch das Analysator-Untermodul (102) des Bord-Sammlermoduls (101) für jedes empfangene Datenpaket einer Charakterisierung (F-G) des empfangenen Datenpakets, das den Identifikationscode (I-D) und die technischen Werte (V-T), die für die Radarantenneneinheit (A1, A2, ..., AN) repräsentativ sind und aus dem empfangenen Datenpaket extrahiert wurden, die von dem Aggregator-Untermodul (103) bestimmten aggregierten Informationen (I-A) und eine der Radarantenneneinheit (A1, A2, ..., AN) zugeordnete Zeitreihe aggregierter Informationen (S-T) umfasst;
- Speichern (506) durch das Analysator-Untermodul (102) des Bord-Sammlermoduls (101) der bestimmten Charakterisierung (F-G) des empfangenen Datenpakets in einem ersten Datenbank-Untermodul (105) des Bord-Sammlermoduls (101), wobei die in der Charakterisierung (F-G) des empfangenen Datenpakets enthaltene Zeitreihe der aggregierten Informationen (S-T) von einem historischen Untermodul (104) des Bord-Sammlermoduls (101) auf der Grundlage von Zeitreihen aggregierter Informationen (S-T') bestimmt wird, die zuvor in dem ersten Datenbank-Untermodul (105) des Bord-Sammlermoduls (101) gespeichert wurden und zuvor empfangenen Datenpaketen zugeordnet sind, die sich auf dieselbe Radarantenneneinheit (A1, A2, ..., AN) der Vielzahl von Radarantenneneinheiten (P-A) beziehen;
- Bereitstellen (507) der bestimmten Charakterisierung (F-G) des empfangenen Datenpakets durch das Bord-Sammlermodul (101) an ein Richtlinienauswertungsmodul (107);
- Bereitstellen (508) durch das Bord-Sammlermodul (101) einer zuletzt bestimmten Charakterisierung (F-G') für jedes empfangene Datenpaket, das sich auf eine Radarantenneneinheit (A1, A2, ..., AN) der Vielzahl von Radarantenneneinheiten (P-A) bezieht, die nicht die Radarantenneneinheit (A1, A2, ..., AN) ist, von der das empfangene Datenpaket stammt, an ein Richtliniengeneratormodul (106);
- Auswählen (509) durch das Richtliniengeneratormodul (106) von festgelegten Referenzrichtlinien (P-F), die auf der Grundlage der zuletzt bestimmten Charakterisierung (F-G') für jedes empfangene Datenpaket anwendbar sind, das sich auf eine Radarantenneneinheit (A1, A2, ..., AN) der Vielzahl von Radarantenneneinheiten (P-A) bezieht, die nicht die Radarantenneneinheit (A1, A2, ..., AN) ist, von der das empfangene Datenpaket stammt, das vom Bord-Sammlermodul (101) bereitgestellt wird, wobei die anwendbaren festgelegten Referenzrichtlinien (F-P) aus einer Vielzahl von festgelegten Kandidaten-Referenzrichtlinien (P-F') ausgewählt werden, die in einem zweiten Datenbank-Untermodul (106') des Richtliniengeneratormoduls (106) gespeichert sind, wobei jede Referenzrichtlinie (P-F) festgelegte Regeln umfasst, die für die erwarteten Bedingungen des Radarsystems (R-D) bei ordnungsgemäßem Betrieb repräsentativ sind;
- Bereitstellen (510) der ausgewählten anwendbaren festgelegten Referenzrichtlinien (P-F) durch das Richtliniengeneratormodul (106) an ein drittes Datenbank-Untermodul (107') des Richtlinienauswertungsmoduls (107);
- Erkennen (511) durch das Richtlinienauswertungsmodul (107) des Vorhandenseins oder Fehlens einer Anomalie in dem Radarsystem (R-D) auf der Grundlage des Vergleichs zwischen der Charakterisierung (F-G) des von dem Bord-Sammlermodul (101) bereitgestellten empfangenen Datenpakets und den ausgewählten anwendbaren festgelegten Referenzrichtlinien (P-F), die in dem dritten Datenbank-Untermodul (107') des Richtlinienauswertungsmoduls (107) gespeichert sind;
- Erzeugen (512) von Informationen (I1), die für eine in dem Radarsystem (R-D) erkannte Anomalie repräsentativ sind, durch das Richtlinienauswertungsmodul (107).

2. Verfahren (500) nach Anspruch 1, wobei das Bord-Sammlermodul (101) ein Anomalie-Empfänger-Untermodul (108) umfasst, wobei das Verfahren (500) einen Schritt des Bereitstellens (513) der Informationen (I1), die für eine in dem Radarsystem (R-D) erkannte Anomalie repräsentativ sind, an das Anomalie-Empfänger-Untermodul (108) des Bord-Sammlermoduls (101) durch das Richtlinienauswertungsmodul (107) umfasst.

3. Verfahren (500) nach einem der vorhergehenden Ansprüche, das ferner einen Schritt des Anzeigens (514) der Informationen (I1), die für eine in dem Radarsystem (R-D) erkannte Anomalie repräsentativ sind, mittels einer Softwareanwendung durch das Anomalie-Empfänger-Untermodul (108) umfasst.

4. Verfahren (500) nach Anspruch 3, das einen Schritt des Anzeigens (515) zusätzlicher technischer Informationen (U-I), die für die erkannte Anomalie repräsentativ sind, zusätzlich zu den Informationen (I1), die für eine in dem Radarsystem (R-D) erkannte Anomalie repräsentativ sind, durch das Anomalie-Empfänger-Untermodul (108) mittels der Softwareanwendung umfasst.

5. Verfahren (500) nach einem der vorhergehenden Ansprüche, das ferner einen Schritt des Zuordnens (516) einer Anomalie-Ziel-IP-Adresse zu den Informationen (I1), die für eine in dem Radarsystem (R-D) erkannte Anomalie repräsentativ sind, durch das Richtlinienauswertungsmodul (107) umfasst.

6. Verfahren (500) nach Anspruch 5, das ferner einen Schritt des Übertragens (517) der Informationen (I1), die für eine in dem Radarsystem (R-D) erkannte Anomalie repräsentativ sind, an ein Ziel, das der Anomalie-Ziel-IP-Adresse entspricht, die den Informationen (I1) zugeordnet ist, die für eine in dem Radarsystem (R-D) erkannte Anomalie repräsentativ sind, durch das Richtlinienauswertungsmodul (107) umfasst.

7. Anomalieerkennungssystem (100) zur Verwendung in einem Radarsystem (R-D) an Bord eines Schiffes (1), umfassend:
- ein Bord-Sammlermodul (101), das dazu konfiguriert ist, von einem Bord-Datenkommunikationsnetzwerk (NTW) unter Verwendung eines festgelegten Videodatenübertragungsprotokolls einen Strom von Datenpaketen (F-P) zu empfangen, die von einer Vielzahl von Radarantenneneinheiten (P-A) stammen, die an Bord des Schiffes verteilt sind und dazu konfiguriert sind, Daten über das Datenkommunikationsnetzwerk (NTW) zu übertragen, wobei jedes Datenpaket von einer Radarantenneneinheit (A1, A2,..., AN) der Vielzahl von Radarantenneneinheiten (P-A) stammt und einen Identifikationscode (I-D) und technische Werte (V-T) umfasst, die für die Radarantenneneinheit (A1, A2, ..., AN) der Vielzahl von Antennen (P-A) repräsentativ sind, von der das Datenpaket stammt,
wobei das Bord-Sammlermodul (101) umfasst:
- ein Analysator-Untermodul (102);
- ein Aggregator-Untermodul (103);
- ein historisches Untermodul (104);
- ein erstes Datenbank-Untermodul (105);
wobei das Analysator-Untermodul (102) dazu konfiguriert ist, jedes empfangene Datenpaket zu analysieren, um den Identifikationscode (I-D) und die technischen Werte (V-T) zu extrahieren, die für die Radarantenneneinheit (A1, A2, ..., AN) aus der Vielzahl von Radarantenneneinheiten (P-A) repräsentativ sind, von der das Datenpaket stammt, und den Identifikationscode (I-D) und die technischen Werte (V-T), die für die Radarantenneneinheit (A1, A2, ..., AN) repräsentativ sind, an einen Speicherpuffer eines Aggregator-Untermoduls (103) bereitzustellen,
wobei das Aggregator-Untermodul (103) dazu konfiguriert ist, aggregierte Informationen (I-A) des empfangenen Datenpakets auf der Grundlage des Identifikationscodes (I-D) und der technischen Werte (V-T), die für die Radarantenneneinheit (A1, A2, ..., AN) repräsentativ sind und aus dem empfangenen Datenpaket extrahiert wurden, und auf der Grundlage zusätzlicher technischer Werte (V-T'), die für die Radarantenneneinheit (A1, A2, ..., AN) der Vielzahl von Radarantenneneinheiten (P-A) repräsentativ sind, die durch denselben Identifikationscode (I-D) identifiziert wurden und zuvor im Speicherpuffer des Aggregator-Untermoduls (103) gespeichert wurden, zu bestimmen,
wobei das Analysator-Untermodul (102) dazu konfiguriert ist, für jedes empfangene Datenpaket eine Charakterisierung (F-G) des empfangenen Datenpakets, das den Identifikationscode (I-D) und die technischen Werte (V-T), die für die Radarantenneneinheit (A1, A2, ..., AN) repräsentativ sind und aus dem empfangenen Datenpaket extrahiert wurden, die von dem Aggregator-Untermodul (103) bestimmten aggregierten Informationen (I-A) und eine der Radarantenneneinheit (A1, A2, ..., AN) zugeordnete Zeitreihe aggregierter Informationen (S-T) umfasst, zu bestimmen,
wobei das Analysator-Untermodul (102) dazu konfiguriert ist, die bestimmte Charakterisierung (F-G) des empfangenen Datenpakets in einem ersten Datenbank-Untermodul (105) des Bord-Sammlermoduls (101) zu speichern, wobei das historische Untermodul (104) dazu konfiguriert ist, die in der Charakterisierung (F-G) des empfangenen Datenpakets enthaltene Zeitreihe der aggregierten Informationen (S-T) auf der Grundlage von Zeitreihen aggregierter Informationen (S-T') zu bestimmen, die zuvor in dem ersten Datenbank-Untermodul (105) des Bord-Sammlermoduls (101) gespeichert wurden und zuvor empfangenen Datenpaketen zugeordnet sind, die sich auf dieselbe Radarantenneneinheit (A1, A2, ..., AN) der Vielzahl von Radarantenneneinheiten (P-A) beziehen,
wobei das System (100) ferner ein Richtliniengeneratormodul (106) und ein Richtlinienauswertungsmodul (107) umfasst,
wobei das Bord-Sammlermodul (101) dazu konfiguriert ist, die bestimmte Charakterisierung (F-G) des empfangenen Datenpakets an das Richtlinienauswertungsmodul (107) bereitzustellen,
wobei das Bord-Sammlermodul (101) dazu konfiguriert ist, eine zuletzt bestimmte Charakterisierung für jedes empfangene Datenpaket, das sich auf eine Radarantenneneinheit (A1, A2, ..., AN) der Vielzahl von Radarantenneneinheiten (P-A) bezieht, die nicht die Radarantenneneinheit (A1, A2, ..., AN) ist, von der das empfangene Datenpaket stammt, an das Richtliniengeneratormodul (106) bereitzustellen,
wobei das Richtliniengeneratormodul (106) dazu konfiguriert ist, anwendbare festgelegte Referenzrichtlinien (P-F) auf der Grundlage der zuletzt bestimmten Charakterisierung (F-G) für jedes empfangene Datenpaket auszuwählen, das sich auf eine Radarantenneneinheit (A1, A2, ..., AN) der Vielzahl von Radarantenneneinheiten (P-A) bezieht, die nicht die Radarantenneneinheit (A1, A2, .., AN) ist, von der das empfangene Datenpaket stammt, das vom Bord-Sammlermodul (101) bereitgestellt wird, wobei die anwendbaren festgelegten Referenzrichtlinien (P-F) aus einer Vielzahl von festgelegten Kandidaten-Referenzrichtlinien (P-F') auswählbar sind, die in einem zweiten Datenbank-Untermodul (106') des Richtliniengeneratormoduls (106) gespeichert sind, wobei jede Referenzrichtlinie (P-F) festgelegte Regeln umfasst, die für die erwarteten Bedingungen des Radarsystems bei ordnungsgemäßem Betrieb repräsentativ sind,
wobei das Richtliniengeneratormodul (106) dazu konfiguriert ist, die ausgewählten anwendbaren festgelegten Referenzrichtlinien (P-F) an ein drittes Datenbank-Untermodul (107') des Richtlinienauswertungsmoduls (107) bereitzustellen,
wobei das Richtlinienauswertungsmodul (107) dazu konfiguriert ist, das Vorhandensein oder Fehlen einer Anomalie in dem Radarsystem auf der Grundlage des Vergleichs zwischen der Charakterisierung (F-G) des von dem Bord-Sammlermodul (101) bereitgestellten empfangenen Datenpakets und den ausgewählten anwendbaren festgelegten Referenzrichtlinien, die in dem dritten Datenbank-Untermodul (107') des Richtlinienauswertungsmoduls (107) gespeichert sind, zu erkennen,
wobei das Richtlinienauswertungsmodul (107) dazu konfiguriert ist, Informationen (I1), die für eine in dem Radarsystem (R-D) erkannte Anomalie repräsentativ sind, zu erzeugen.

8. System (100) nach Anspruch 7, wobei das Bord-Sammlermodul (101) ein Anomalie-Empfänger-Untermodul (108) umfasst, wobei das Richtlinienauswertungsmodul (107) dazu konfiguriert ist, die Informationen (I1), die für eine in dem Radarsystem (R-D) erkannte Anomalie repräsentativ sind, an das Anomalie-Empfänger-Untermodul (108) bereitzustellen.

9. System (100) nach Anspruch 8, wobei
das Anomalie-Empfänger-Untermodul (108) dazu konfiguriert ist, die Informationen (I1), die für eine in dem Radarsystem (R-D) erkannte Anomalie repräsentativ sind, mittels einer Softwareanwendung anzuzeigen.

10. System (100) nach Anspruch 9, wobei das Anomalie-Empfänger-Untermodul (108) dazu konfiguriert ist, zusätzliche technische Informationen (U-I), die für die erkannte Anomalie repräsentativ sind, zusätzlich zu den Informationen (I1), die für eine in dem Radarsystem (R-D) erkannte Anomalie repräsentativ sind, mittels der Softwareanwendung anzuzeigen.

11. System (100) nach einem der vorhergehenden Ansprüche 7 bis 10, wobei das Richtlinienauswertungsmodul (107) dazu konfiguriert ist, die Informationen (I1), die für eine in dem Radarsystem (R-D) erkannte Anomalie repräsentativ sind, einer Anomalie-Ziel-IP-Adresse zuzuordnen.

12. System (100) nach Anspruch 11, wobei das Richtlinienauswertungsmodul (107) dazu konfiguriert ist, die Informationen (I1), die für eine in dem Radarsystem (R-D) erkannte Anomalie repräsentativ sind, an ein Ziel, das der Anomalie-Ziel-IP-Adresse entspricht, die den Informationen (I1) zugeordnet ist, die für eine in dem Radarsystem (R-D) erkannte Anomalie repräsentativ sind, zu übertragen.

## Revendications

1. Procédé (500) pour détecter des anomalies dans un système radar (R-D) à bord d'un navire (1), comprenant les étapes suivantes de :
- recevoir (501), par un module collecteur à bord (101), d'un réseau de communication de données à bord (NTW) avec le support d'un protocole de transmission de données vidéo établi, un flux de paquets de données (F-P) provenant d'une pluralité d'unités d'antenne radar (P-A) réparties à bord et configurées pour transmettre des données sur ledit réseau de communication de données (NTW), chaque paquet de données provenant d'une unité d'antenne radar (A1, A2, ... , AN) de ladite pluralité d'unités d'antenne radar (P-A), et comprenant un code d'identification (I-D) et des valeurs techniques (V-T) représentatives de l'unité d'antenne radar (A1, A2, ... , AN) de ladite pluralité d'antennes (P-A) d'où provient ledit paquet de données ;
- analyser (502), par un sous-module analyseur (102) du module collecteur à bord (101), chaque paquet de données reçu pour extraire le code d'identification (I-D) et lesdites valeurs techniques (V-T) représentatives de l'unité d'antenne radar (A1, A2, AN) de ladite pluralité d'antennes (P-A) d'où provient ledit paquet de données et fournir (503) ledit code d'identification (I-D) et lesdites valeurs techniques (V-T) représentatives de l'unité d'antenne radar (A1, A2, ..., AN) à une mémoire tampon d'un sous-module agrégateur (103) du module collecteur à bord (101) ;
- déterminer (504), par le sous-module agrégateur (103) du module collecteur à bord (101), des informations agrégées (I-A) du paquet de données reçu sur la base du code d'identification (I-D) et de valeurs techniques (V-T) représentatives de l'unité d'antenne radar (A1, A2, ..., AN) extraites du paquet de données reçu et sur la base de valeurs techniques supplémentaires (V-T') représentatives de l'unité d'antenne radar (A1, A2, ..., AN) de ladite pluralité d'unités d'antenne radar (P-A) identifiées par le même code d'identification (I-D) et préalablement stockées dans la mémoire tampon du sous-module agrégateur (103) du module collecteur à bord (101) ;
- déterminer (505), par le sous-module analyseur (102) du module collecteur à bord (101), pour chaque paquet de données reçu, une caractérisation (F-G) dudit paquet de données reçu comprenant le code d'identification (I-D) et les valeurs techniques (V-T) représentatives de l'unité d'antenne radar (A1, A2, ..., AN) extraites du paquet de données reçu, les informations agrégées (I-A) déterminées par le sous-module agrégateur (103) et une série chronologique d'informations agrégées (S-T) associées à ladite unité d'antenne radar (A1, A2, ..., AN) ;
- stocker (506), par le sous-module analyseur (102) du module collecteur à bord (101), la caractérisation déterminée (F-G) du paquet de données reçu dans un premier sous-module de base de données (105) du module collecteur à bord (101), lesdites séries chronologiques d'informations agrégées (S-T) contenues dans la caractérisation (F-G) du paquet de données reçu étant déterminées, par un sous-module historique (104) du module collecteur à bord (101), sur la base de séries chronologiques d'informations agrégées (S-T') précédemment stockées dans le premier sous-module de base de données (105) du module collecteur à bord (101) et associées à des paquets de données précédemment reçus se référant à la même unité d'antenne radar (A1, A2, ..., AN) de ladite pluralité d'unités d'antenne radio (P-A) ;
- fournir (507), par le module collecteur à bord (101), la caractérisation déterminée (F-G) du paquet de données reçu à un module d'évaluation de politique (107) ;
- fournir (508), par le module collecteur à bord (101), une dernière caractérisation (F-G') déterminée pour chaque paquet de données reçu référencé à une unité d'antenne radar (A1, A2, ..., AN) de ladite pluralité d'unités d'antenne radar (P-A) autres que l'unité d'antenne radar (A1, A2, ..., AN) d'où provient le paquet de données reçu, à un module générateur de politique (106) ;
- sélectionner (509), par le module générateur de politique (106), des politiques de référence établies (P-F) applicables sur la base de la dernière caractérisation (F-G') déterminée pour chaque paquet de données reçu référencé à une unité d'antenne radar (A1, A2, ..., AN) de ladite pluralité d'unités d'antenne radar (P-A) autres que l'unité d'antenne radar (A1, A2, ..., AN) d'où provient le paquet de données reçu fourni par le module collecteur à bord (101), lesdites politiques de référence établies applicables (F-P) étant sélectionnées parmi une pluralité de politiques de référence établies candidates (P-F') stockées dans un deuxième sous-module de base de données (106') du module générateur de politique (106), chaque politique de référence (P-F) comprenant des règles établies représentatives de conditions attendues du système radar (R-D) lorsqu'il fonctionne correctement ;
- fournir (510), par le module générateur de politique (106), lesdites politiques de référence établies applicables sélectionnées (P-F) à un troisième sous-module de base de données (107') dudit module d'évaluation de politiques (107) ;
- détecter (511), par le module d'évaluation de politique (107), la présence ou l'absence d'une anomalie dans le système radar (R-D) sur la base de la comparaison entre la caractérisation (F-G) du paquet de données reçu fournie par le module collecteur à bord (101) et les politiques de référence établies applicables sélectionnées (P-F) stockées dans le troisième sous-module de base de données (107') dudit module d'évaluation de politique (107) ;
- générer (512), par le module d'évaluation de politique (107), des informations (I1) représentatives d'une anomalie détectée dans le système radar (R-D).

2. Procédé (500) selon la revendication 1, dans lequel le module collecteur à bord (101) comprend un sous-module récepteur d'anomalie (108), le procédé (500) comprenant une étape consistant à fournir (513), par le module d'évaluation de politique (107), les informations (I1) représentatives d'une anomalie détectée dans le système radar (R-D) au sous-module récepteur d'anomalie (108) du module collecteur à bord (101).

3. Procédé (500) selon l'une quelconque des revendications précédentes, comprenant en outre une étape d'affichage (514), par le sous-module récepteur d'anomalie (108), au moyen d'une application logicielle, des informations (I1) représentatives d'une anomalie détectée dans le système radar (R-D).

4. Procédé (500) selon la revendication 3, comprenant une étape d'affichage (515), par le sous-module récepteur d'anomalie (108), au moyen d'une application logicielle, d'informations techniques supplémentaires (U-I) représentatives de l'anomalie détectée en plus des informations (I1) représentatives d'une anomalie détectée dans le système radar (R-D).

5. Procédé (500) selon l'une quelconque des revendications précédentes, comprenant en outre une étape d'association (516), par le module d'évaluation de politique (107), d'une adresse IP de destination d'anomalie avec les informations (I1) représentatives d'une anomalie détectée dans le système radar (R-D) .

6. Procédé (500) selon la revendication 5, comprenant en outre une étape consistant à transmettre (517), par le module d'évaluation de politique (107), les informations (I1) représentatives d'une anomalie détectée dans le système radar (R-D) à une destination correspondant à l'adresse IP de destination d'anomalie associée aux informations (I1) représentatives d'une anomalie détectée dans le système radar (R-D).

7. Système de détection d'anomalie (100) destiné à être utilisé dans un système radar (R-D) à bord d'un navire (1), comprenant :
- un module collecteur à bord (101) configuré pour recevoir d'un réseau de communication de données à bord (NTW) avec le support d'un protocole de transmission de données vidéo établi, un flux de paquets de données (F-P) provenant d'une pluralité d'unités d'antenne radar (P-A) réparties à bord et configurées pour transmettre des données sur ledit réseau de communication de données (NTW), chaque paquet de données provenant d'une unité d'antenne radar (A1, A2, ..., AN) de ladite pluralité d'unités d'antenne radar (P-A), et comprenant un code d'identification (I-D) et des valeurs techniques (V-T) représentatives de l'unité d'antenne radar (A1, A2, ..., AN) de ladite pluralité d'antennes (P-A) d'où provient ledit paquet de données,
ledit module collecteur à bord (101) comprenant :
- un sous-module analyseur (102) ;
- un sous-module agrégateur (103) ;
- un sous-module historique (104) ;
- un premier sous-module de base de données (105) ;
ledit sous-module analyseur (102) étant configuré pour analyser chaque paquet de données reçu pour extraire le code d'identification (I-D) et lesdites valeurs techniques (V-T) représentatives de l'unité d'antenne radar (A1, A2, ..., AN) de ladite pluralité d'unités d'antenne radar (P-A) d'où provient ledit paquet de données et pour fournir ledit code d'identification (I-D) et lesdites valeurs techniques (V-T) représentatives de l'unité d'antenne radar (A1, A2, ..., AN) à une mémoire tampon dudit sous-module agrégateur (103),
le sous-module agrégateur (103) étant configuré pour déterminer des informations agrégées (I-A) du paquet de données reçu sur la base du code d'identification (I-D) et des valeurs techniques (V-T) représentatives de l'unité d'antenne radar (A1, A2, ..., AN) extraites du paquet de données reçu et sur la base de valeurs techniques supplémentaires (V-T') représentatives de l'unité d'antenne radar (A1, A2, ..., AN) de ladite pluralité d'unités d'antenne radar (P-A) identifiées par le même code d'identification (I-D) et préalablement stockés dans la mémoire tampon du sous-module agrégateur (103),
le sous-module analyseur (102) étant configuré pour déterminer pour chaque paquet de données reçu, une caractérisation (F-G) dudit paquet de données reçu comprenant le code d'identification (I-D) et des valeurs techniques (V-T) représentatives de l'unité d'antenne radar (A1, A2, ..., AN) extraites du paquet de données reçu, les informations agrégées (I-A) déterminées par le sous-module agrégateur (103) et une série chronologique d'informations agrégées (S-T) associée à ladite unité d'antenne radar (A1, A2, ..., AN),
le sous-module analyseur (103) étant configuré pour stocker la caractérisation déterminée (F-G) du paquet de données reçu dans un premier sous-module de base de données (105) du module collecteur à bord (101), le sous-module historique (104) étant configuré pour déterminer ladite série chronologique d'informations agrégées (S-T) contenue dans la caractérisation (F-G) de la série chronologique d'informations agrégées (S-T') basée sur le paquet de données reçu précédemment stockée dans le premier sous-module de base de données (105) du module collecteur à bord (101) et associée à des paquets de données précédemment reçus référencés à la même unité d'antenne radar (A1, A2, ..., AN) de ladite pluralité d'unités d'antenne radio (P-A),
le système (100) comprend en outre un module générateur de politique (106) et un module d'évaluation de politique (107), le module collecteur à bord (101) étant configuré pour fournir la caractérisation déterminée (F-G) du paquet de données reçu au module d'évaluation de politique (107),
le module collecteur à bord (101) étant configuré pour fournir une dernière caractérisation déterminée pour chaque paquet de données reçu référencé à une unité d'antenne radar (A1, A2, ..., AN) de ladite pluralité d'unités d'antenne radar (P-A) autres que l'unité d'antenne radar (A1, A2, ..., AN) d'où provient le paquet de données reçu, au module générateur de politique (106),
le module générateur de politique (106) étant configuré pour sélectionner des politiques de référence établies applicables (P-F) sur la base de la dernière caractérisation (F-G) déterminée pour chaque paquet de données reçu référencé à une unité d'antenne radar (A1, A2, ..., AN) de ladite pluralité d'unités d'antenne radar (P-A) autres que l'unité d'antenne radar (A1, A2, ..., AN) d'où provient le paquet de données reçu fourni par le module collecteur à bord (101), lesdites politiques de référence établies applicables (P-F) pouvant être sélectionnées d'une pluralité de politiques de référence établies candidates (P-F') stockées dans un deuxième sous-module de base de données (106') du module générateur de politique (106), chaque politique de référence (P-F) comprenant des règles établies représentatives des conditions attendues du système radar lorsqu'il fonctionne correctement,
le module générateur de politique (106) étant configuré pour fournir lesdites politiques de référence établies applicables sélectionnées (P-F) à un troisième sous-module de base de données (107') dudit module d'évaluation de politique (107),
le module d'évaluation de politique (107) étant configuré pour détecter la présence ou l'absence d'une anomalie dans le système radar sur la base de la comparaison entre la caractérisation (F-G) du paquet de données reçu fournie par le module collecteur à bord (101) et les politiques de référence établies applicables sélectionnées stockées dans le troisième sous-module de base de données (107') dudit module d'évaluation de politique (107),
le module d'évaluation de politique (107) étant configuré pour générer des informations (I1) représentatives d'une anomalie détectée dans le système radar (R-D).

8. Système (100) selon la revendication 7, dans lequel le module collecteur à bord (101) comprend un sous-module récepteur d'anomalie (108), le module d'évaluation de politique (107) étant configuré pour fournir les informations (I1) représentatives d'une anomalie détectée dans le système radar (R-D) au sous-module récepteur d'anomalie (108).

9. Système (100) selon la revendication 8, dans lequel le sous-module récepteur d'anomalie (108) est configuré pour afficher, au moyen d'une application logicielle, les informations (I1) représentatives d'une anomalie détectée dans le système radar (R-D).

10. Système (100) selon la revendication 9, dans lequel le sous-module récepteur d'anomalie (108) est configuré pour afficher, au moyen de l'application logicielle, des informations techniques supplémentaires (U-I) représentatives de l'anomalie détectée en plus des informations (I1) représentatives d'une anomalie détectée dans le système radar (R-D).

11. Système (100) selon l'une quelconque des revendications précédentes 7 à 10, dans lequel le module d'évaluation de politique (107) est configuré pour associer les informations (I1) représentatives d'une anomalie détectée dans le système radar (R-D) à une adresse IP de destination d'anomalie.

12. Système (100) selon la revendication 11, dans lequel le module d'évaluation de politique (107) est configuré pour transmettre les informations (I1) représentatives d'une anomalie détectée dans le système radar (R-D) à une destination correspondant à l'adresse IP de destination d'anomalie associée aux informations (I1) représentatives d'une anomalie détectée dans le système radar (R-D).
